# EUROPEAN PATENT SPECIFICATION

(11) **EP 2 573 407 B1**
(45) Date of publication and mention of the grant of the patent: **06.07.2016**
(21) Application number: 10851802.8
(22) Date of filing: 17.05.2010
(51) Int. Cl.: F15B 13/01, E02F 9/22, F16K 15/00

(54) **HYDRAULIC CONTROL VALVE FOR CONSTRUCTION MACHINERY**
HYDRAULISCHES STEUERVENTIL FÜR EINE BAUMASCHINE
VANNE DE COMMANDE HYDRAULIQUE POUR ENGIN DE CONSTRUCTION

(43) Date of publication of application: 27.03.2013
(73) Proprietor: Volvo Construction Equipment AB, 631 85 Eskilstuna (SE)
(72) Inventor: KU, Bon Seuk, Changwon-si, Gyeonsangnam-do 641-430 (KR)
(74) Representative: Epping - Hermann - Fischer
(86) International application number: PCT/KR2010/003096
(87) International publication number: WO 2011/145755

(56) References cited:
- EP-A1- 1 143 151
- EP-A1- 1 227 249
- DE-A1- 3 723 672
- DE-A1- 19 956 717
- KR-A- 20080 055 873
- KR-A- 20080 077 007
- KR-B1- 100 800 081
- KR-B1- 100 813 559

## Description

### TECHNICAL FIELD

The present invention relates to a hydraulic control valve for a construction machine on which a working device, such as a boom or an arm, is mounted. More particularly, the present invention relates to a hydraulic control valve for a construction machine, which can variably control the flow of hydraulic fluid that is supplied to a hydraulic cylinder to drive a working device.

### BACKGROUND ART

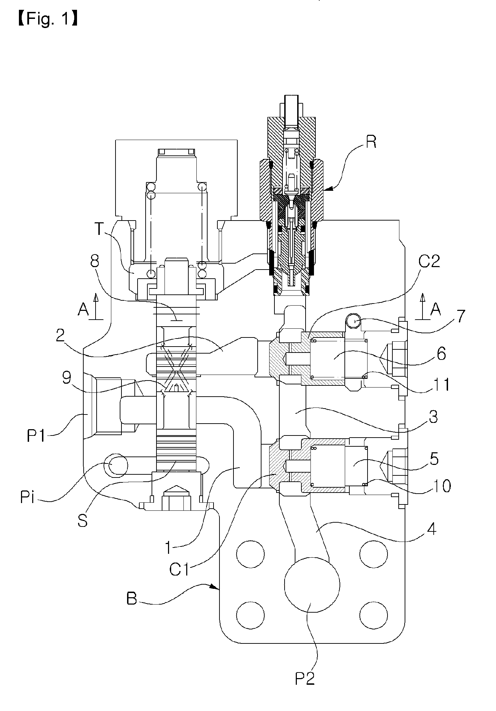

A hydraulic control valve in the related art, as shown in Figs. 1 to 3, includes a valve block B in which an inlet port P1 and an outlet port P2 that communicates with the inlet port P1 are formed; a first check valve C1 installed to open and close an intersection portion of a path 1 (1) communicating with the inlet port P1 and a path 4 (4) communicating with the outlet port P2, the first check valve C1 permitting a flow of hydraulic fluid from the path 1 (1) to the path 4 (4) and limiting a flow of the hydraulic fluid from the path 4 (4) to the path 1 (1) ; a second check valve C2 installed to open and close an intersection portion of a path 3 (3) communicating with the path 4 (4) and a path 2 (2) communicating with the path 1 (1), the second check valve C2 permitting a flow of the hydraulic fluid from the path 2 (2) to the path 3 (3) and limiting a flow of the hydraulic fluid from the path 3 (3) to the path 2 (2); and a spool S slidingly coupled to the valve block B to control the flow of the hydraulic fluid from the outlet port P2 to the inlet port P1 through the second check valve C2 that is opened when the spool S is shifted by pilot signal pressure Pi.

In the drawings, the reference numeral R denotes a relief valve that protects a hydraulic circuit by feeding the hydraulic fluid that corresponds to excessive pressure back to a hydraulic tank T when pressure that exceeds a predetermined pressure is generated in the path 4 (4).

According to the hydraulic control valve in the related art, the hydraulic fluid that is supplied to the inlet port P1 flows to the outlet port P2 through the path 1 (1), the first check valve C1, and the path 4 (4) in order.

At this time, since the first check valve C1 is maintained in a closed state by the pressure in the back pressure chamber 5 of the first check valve C1 and the elastic force of a spring 10, the hydraulic fluid does not flow from the path 3 (3) to the path 2 (2).

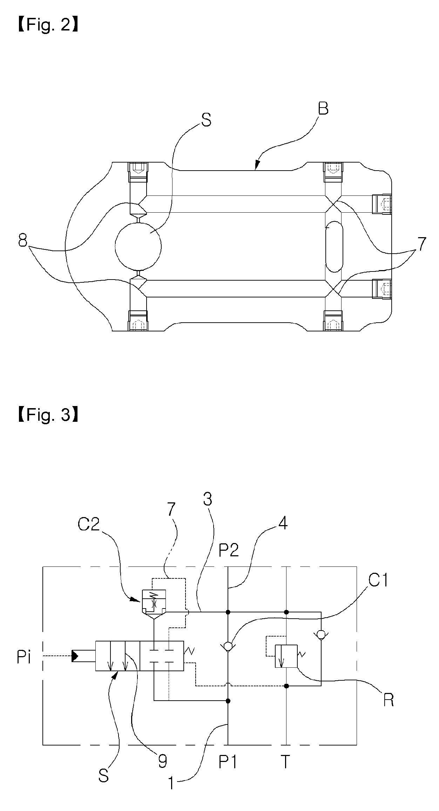

On the other hand, if the spool S is shifted upward as shown in Fig. 1 according to the supply of the pilot signal pressure Pi (in Fig. 3, the spool S is shifted to the right side by the pilot signal pressure Pi), a path b (8) communicates with a path c (9) formed on the spool S, and thus the pressure in the back pressure chamber 6 of the second check valve C2 becomes equal to the pressure of the inlet port P1.

At this time, since the pressure of the path 3 (3) becomes higher than the pressure of the back pressure chamber 6, the second check valve C2 is shifted to the right side as shown in Fig. 1 (in Fig. 3, the second check valve C2 is shifted upward by the pressure of the path 3 (3)). Through this, the path 2 (2) that communicates with the path 3 (3) communicates with the path 1 (1) through the spool S shifted upward.

Accordingly, the hydraulic fluid in the outlet port P2 is supplied to the path 1 (1) that communicates with the inlet port P1 through the path 4 (4), the path 3 (3), the path 2 (2), and the spool S in order.

As described above, in the case of controlling the flow of the hydraulic fluid from the outlet port P2 to the inlet port P1 of the hydraulic control valve by the pilot signal pressure Pi, a large-size spool S that is shifted by the pilot signal pressure Pi is required so that the pressure of the back pressure chamber 6 of the second check valve C2 can be controlled and the hydraulic fluid can flow from the inlet port P1 to the outlet port P2 with a small loss of pressure.

Due to this, since the hydraulic control valve that is coupled to the large-size spool is large-sized, the manufacturing cost is increased to weaken the competitive power, and the work to mount the large-sized control valve on the hydraulic cylinder becomes difficult to cause inconvenience in manufacturing the hydraulic control valve.

Further the EP 1 143 151 A1 discloses a hydraulic control valve for a construction machine that controls fluid supply to a hydraulic cylinder to drive a working device, comprising:
a valve block in which an inlet port and an outlet port that communicates with the inlet port is formed;
a check valve installed to open and close an intersection portion of a path communicating with the inlet port and a path communicating with the outlet port and provided with a first throttling portion to permit a flow of the hydraulic fluid from the inlet port to the outlet port and a spool slidingly coupled to the valve block, and provided with a second throttling portion.

This hydraulic control valve has deficiencies in the control of the flow of the hydraulic fluid.

### DISCLOSURE

### TECHNICAL PROBLEM

Therefore, the present invention has been made to solve the above-mentioned problems occurring in the related art, and one embodiment of the present invention is related to a hydraulic control valve for a construction machine, which can minimize the number of hydraulic components that constitute a control valve for controlling hydraulic fluid supplied to a hydraulic cylinder so as to drive a working device, so that the manufacturing cost can be reduced and the control valve can be easily mounted on the hydraulic cylinder or the like. It is especially an object of the invention to improve the flow of the hydraulic fluid from the inlet port to the outlet port and to achieve more control of the flow of the hydraulic fluid from the outlet port to the inlet port.

### TECHNICAL SOLUTION

In accordance with claim 1 of the present invention, there is provided a hydraulic control valve for a construction machine that controls hydraulic fluid supplied to a hydraulic cylinder to drive a working device, which includes a valve block in which an inlet port and an outlet port that communicates with the inlet port is formed; a check valve installed to open and close an intersection portion of a path 1 communicating with the inlet port and a path 2 communicating with the outlet port, and provided with a first throttling portion to permit a flow of the hydraulic fluid from the inlet port to the outlet port and to variably control the flow of the hydraulic fluid from the outlet port to the inlet port; a second check valve installed in a branch path that is branch-connected to the path 1 and the path 2 to make the flow of the hydraulic fluid from the inlet port to the outlet port smooth; and a spool slidingly coupled to the valve block, and provided with a second throttling portion to variably control the flow of the hydraulic fluid from the outlet port to the inlet port through the check valve that is opened when the spool is shifted by pilot signal pressure.

The hydraulic control valve for a construction machine further includes a third throttling portion formed in the check valve to variably control the flow of the hydraulic fluid from the outlet port to the inlet port, wherein the third throttling portion controls the hydraulic fluid that flows from the path 2 to the path 1 to correspond to an amount of spool shift. When the check valve moves to the right side, the first throttling portion formed on the check valve forms a variable throttling portion and the path 2 and the path 1 communicate with each other by the third throttling portion. The position of the second throttling portion is determined depending on the shift amount of the spool while the shift amount of the spool is determined depending on the pilot signal pressure.

### ADVANTAGEOUS EFFECT

As described above, according to the hydraulic control valve and according to the aspects of the present invention, the following advantages can be obtained.

Since the hydraulic control valve for a construction machine which controls the hydraulic fluid that is supplied to the hydraulic cylinder to drive a working device is constructed with the minimum number of hydraulic components, the manufacturing cost can be reduced to heighten the price competitiveness, and the control valve can be easily mounted on the hydraulic cylinder or the like.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a cross-section view of a hydraulic control valve for a construction machine in the related art;
Fig. 2 is a cross-sectional view taken along line A-A in Fig. 1;
Fig. 3 is a hydraulic circuit diagram of a hydraulic control valve for a construction machine in the related art;
Fig. 4 is a cross-sectional view of a hydraulic control valve for a construction machine according to first embodiment of a hydraulic control valve;
Fig. 5 is a hydraulic circuit diagram of a hydraulic control valve for a construction machine according to the first embodiment of the hydraulic control valve;
Fig. 6 is a cross-sectional view of a hydraulic control valve for a construction machine according to a second embodiment of a hydraulic control valve;
Fig. 7 is a hydraulic circuit diagram of a hydraulic control valve for a construction machine according to the second embodiment of the hydraulic control valve;
Fig. 8 is a cross-sectional view of a hydraulic control valve for a construction machine according to a third embodiment of a hydraulic control valve according to the present invention;
Fig. 9 is a hydraulic circuit diagram of a hydraulic control valve for a construction machine according to the third embodiment of hydraulic control valve according to the present invention; and
Fig. 10 is a detailed view of a check valve in a hydraulic control valve for a construction machine according to an embodiment of the present invention.

### * Description of Reference Numerals in the Drawing

50: inlet port
51: outlet port
52: valve block
53: path 1
54: path 2
55: first throttling portion
56: check valve
57: second throttling portion
58: spool
59: third throttling portion
60: first check valve
61: branch path
62: second check valve

### BEST MODE

Now, preferred embodiments of the present invention will be described in detail with reference to the accompanying drawings. The matters defined in the description, such as the detailed construction and elements, are only specific details provided to assist those of ordinary skill in the art in a comprehensive understanding of the invention, and the present invention is not limited to the embodiments disclosed hereinafter.

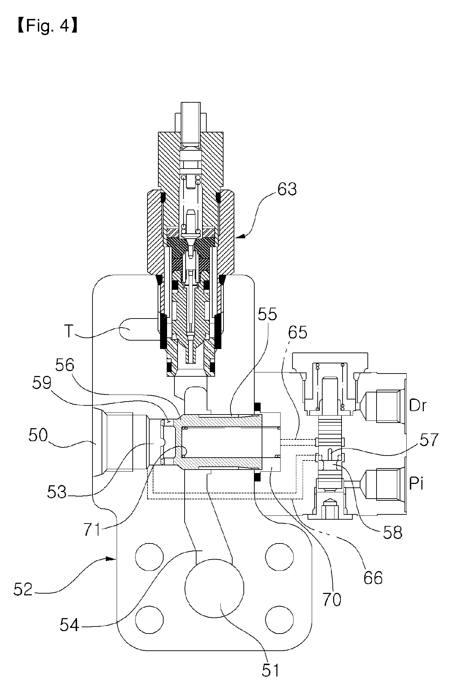

According to an unclaimed, first embodiment of a hydraulic control valve as illustrated in Figs. 4, 5, and 10, a hydraulic control valve for a construction machine that controls hydraulic fluid supplied to a hydraulic cylinder (boom cylinder) to drive a working device, such as a boom or an arm, includes a valve block 52 in which an inlet port 50 and an outlet port 51 that communicates with the inlet port 50 are formed; a check valve 56 installed to open and close an intersection portion of a path 1 53 communicating with the inlet port 50 and a path 2 54 communicating with the outlet port 51, and provided with a first throttling portion 55 to permit a flow of the hydraulic fluid from the inlet port 50 to the outlet port 51 and to variably control a flow of the hydraulic fluid from the outlet port 51 to the inlet port 50; and a spool 58 slidingly coupled to the valve block 52, and provided with a second throttling portion 57 to variably control the flow of the hydraulic fluid from the outlet port 51 to the inlet port 50 through the check valve 56 that is opened when the spool 58 is shifted by pilot signal pressure.

The hydraulic control valve for a construction machine may further include a third throttling portion 59 formed in the check valve 56 to variably control the flow of the hydraulic fluid from the outlet port 51 to the inlet port 50, wherein the third throttling portion 59 controls the hydraulic fluid that flows from the path 2 54 to the path 1 53 to correspond to an amount of spool shift.
In the drawings, the reference numeral 63 denotes a relief valve that maintains constant pressure by feeding the hydraulic fluid that corresponds to excessive pressure back to a hydraulic tank T when pressure that exceeds a predetermined pressure is generated in the path 2 54.

Hereinafter, the operation of the hydraulic control valve for a construction machine according to the first embodiment of the present invention will be described.

As shown in Figs. 4, 5, and 10, since a back pressure chamber 70 to which the check valve 56 is slidingly coupled and the path 2 54 communicate with each other by the first throttling portion 55, the check valve 56 is pushed to the right side if the pressure of the path 1 53 is higher than the pressure of the path 2 54, and the hydraulic fluid that is supplied to the inlet port 50 can flow to the outlet port 51.

On the other hand, the flow of the hydraulic fluid from the outlet port 51 to the inlet port 50 may be controlled by the spool 58 depending on the supply of the pilot signal pressure Pi. In the initial stage where the pilot signal pressure Pi is not applied to the spool 58, the check valve 56 is maintained in a closed state by the elastic force of a spring 71 and the pressure of the back pressure chamber 70 (in Fig. 4, the check valve 56 is seated to the left side). Because of this, the flow of the hydraulic fluid from the path 2 54 to the path 1 53 is not permitted.

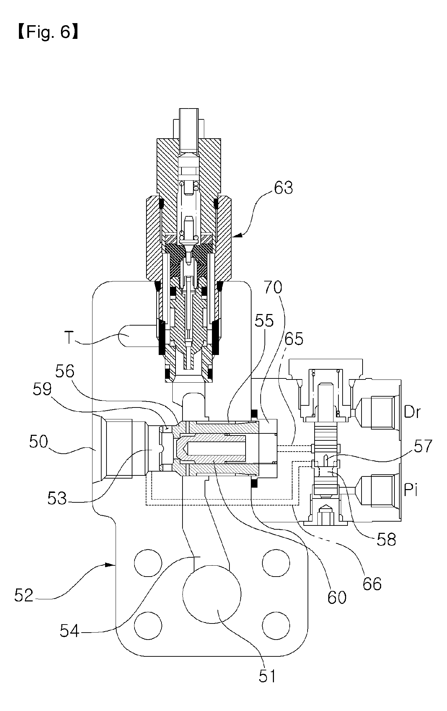

If the pilot signal pressure Pi is applied to shift the spool 58 upward (in Fig. 6, the spool 58 is shifted to the right side), the path 3 65, which communicates with the back pressure chamber 70, communicates with the second throttling portion 57 of the spool 58, and then communicates with the path 1 53 through the path 4 66.

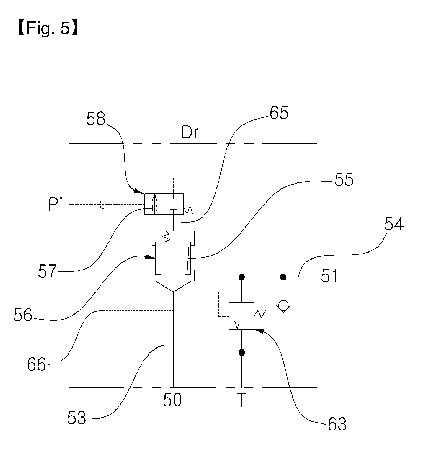

At this time, since the path 1 53 in a lower pressure state and the pressure of the back pressure chamber 70 is lowered, the check valve 56 moves to the right side (in Fig. 5, the check valve 56 moves upward). Accordingly, the hydraulic fluid of the outlet port 51 flows to the inlet port 50 through the path 2 54, the open check valve 56, and the path 1 53 in order.

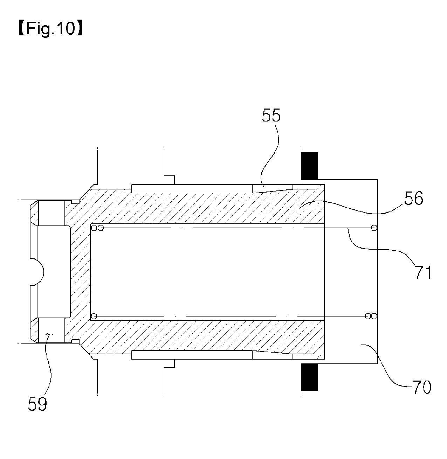

At this time, if the check valve 56 moves to the right side as shown in Fig. 10, the first throttling portion 55 formed on the check valve 56 forms a variable throttling portion. Further, if the spool 58 moves upward as shown in Fig. 4, the second throttling portion 57 formed on the spool 58 forms a variable throttling portion.

As described above, since the shift amount of the spool 58 is determined depending on the pilot signal pressure Pi, the position of the second throttling portion 57 is determined depending on the shift amount of the spool 58. Since the position of the right end of the check valve 58 is determined, the path 2 54 and the path 153 communicate with each other by the third throttling portion 59.

Through this, the flow of the hydraulic fluid from the outlet port 51 to the inlet port 50 can be variably controlled.

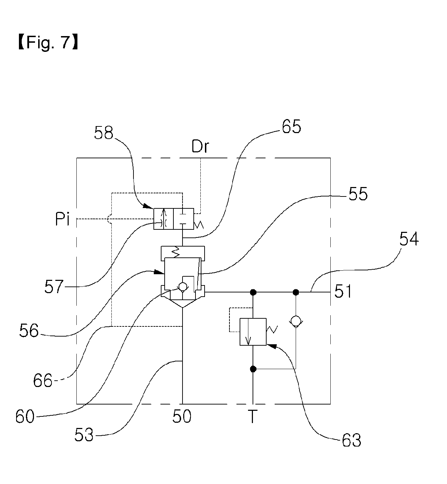

According to an unclaimed, second embodiment of a hydraulic control valve as illustrated in Figs. 6, 7, and 10, a hydraulic control valve for a construction machine that controls hydraulic fluid supplied to a hydraulic cylinder (boom cylinder) to drive a working device, such as a boom or an arm, includes a valve block 52 in which an inlet port 50 and an outlet port 51 that communicates with the inlet port 50 is formed; a check valve 56 installed to open and close an intersection portion of a path 1 53 communicating with the inlet port 50 and a path 2 54 communicating with the outlet port 51, and provided with a first throttling portion 55 to permit a flow of the hydraulic fluid from the inlet port 50 to the outlet port 51 and to variably control a flow of the hydraulic fluid from the outlet port 51 to the inlet port 50; a first check valve 60 of a built-in type is formed in the check valve 56 to make the flow of the hydraulic fluid from the inlet port 50 to the outlet port 51 smooth; and a spool 58 slidingly coupled to the valve block 52, and provided with a second throttling portion 57 to variably control the flow of the hydraulic fluid from the outlet port 51 to the inlet port 50 through the check valve 56 that is opened when the spool 58 is shifted by pilot signal pressure.

At this time, since the configuration, except for the first check valve 60 of the built-in type formed in the check valve 56 to make the flow of the hydraulic fluid from the inlet port 50 to the outlet port 51 smooth, is the same as the configuration of the hydraulic control valve according to the first embodiment of the present invention, the detailed explanation of the configuration and the operation thereof will be omitted, and the same reference numerals are given to the duplicate configurations.

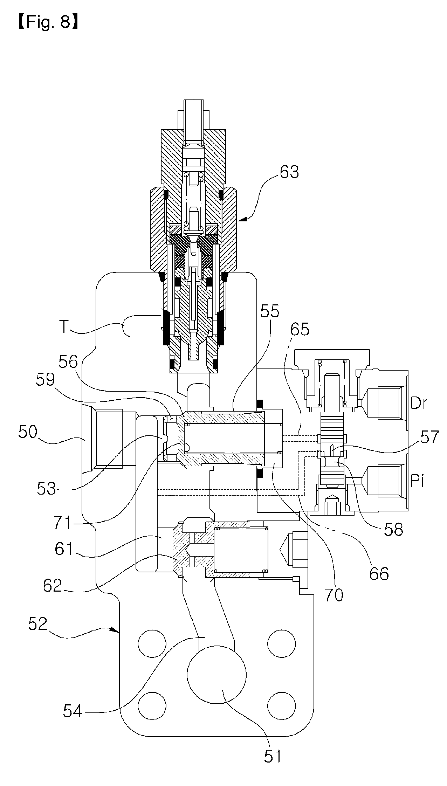

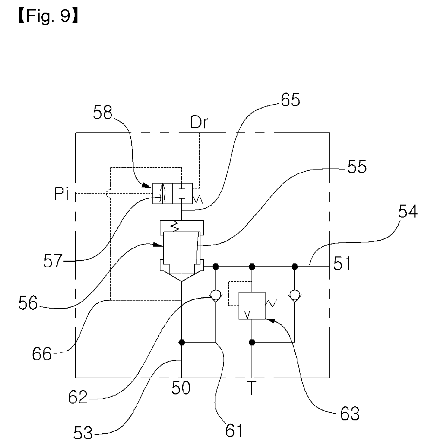

According to a claimed, third embodiment of the present invention as illustrated in Figs. 8 to 10, a hydraulic control valve for a construction machine that controls hydraulic fluid supplied to a hydraulic cylinder (boom cylinder) to drive a working device, such as a boom or an arm, includes a valve block 52 in which an inlet port 50 and an outlet port 51 that communicates with the inlet port 50 are formed; a check valve 56 installed to open and close an intersection portion of a path 1 53 communicating with the inlet port 50 and a path 2 54 communicating with the outlet port 51, and provided with a first throttling portion 55 to permit the flow of the hydraulic fluid from the inlet port 50 to the outlet port 51 and to variably control a flow of the hydraulic fluid from the outlet port 51 to the inlet port 50; a second check valve 62 installed in a branch path 61 that is branch-connected to the path 1 53 and the path 2 54 to make the flow of the hydraulic fluid from the inlet port 50 to the outlet port 51 smooth; and a spool 58 slidingly coupled to the valve block 52, and provided with a second throttling portion 57 to variably control the flow of the hydraulic fluid from the outlet port 51 to the inlet port 50 through the check valve 56 that is opened when the spool 58 is shifted by pilot signal pressure.

At this time, since the configuration, except for the second check valve 62 installed in the branch path 61 that is branch-connected to the path 1 53 and the path 2 54 to make the flow of the hydraulic fluid from the inlet port 50 to the outlet port 51 smooth, is the same as the configuration of the hydraulic control valve according to the first embodiment of the present invention, the detailed explanation of the configuration and the operation thereof will be omitted, and the same reference numerals are given to the duplicate configurations.

As described above, according to the hydraulic control valve for a construction machine that controls the hydraulic fluid supplied to the hydraulic cylinder to drive the working device, such as the boom, according to the embodiments of the present invention, the movement amount of the check valve is determined depending on the shift amount of the spool that corresponds to the pilot signal pressure, and the flow of the hydraulic fluid from the outlet port to the inlet port can be variably controlled depending on the movement amount of the check valve.

### INDUSTRIAL APPLICABILITY

As apparent from the above description, according to the hydraulic control valve for a construction machine according to the embodiments of the present invention, since the hydraulic control valve which controls the hydraulic fluid that is supplied to the hydraulic cylinder to drive the working device is constructed with the minimum number of hydraulic components, the manufacturing cost can be reduced to heighten the price competitiveness, and the control valve can be easily mounted on the hydraulic cylinder or the like.

## Claims

1. A hydraulic control valve for a construction machine that controls hydraulic fluid supplied to a hydraulic cylinder to drive a working device, comprising:
a valve block (52) in which an inlet port (50) and an outlet port (51) that communicates with the inlet port (50) is formed;
a check valve (56) installed to open and close an intersection portion of a path 1 (53) communicating with the inlet port (50) and a path 2 (54) communicating with the outlet port (51), and provided with a first throttling portion (55) to permit a flow of the hydraulic fluid from the inlet port (50) to the outlet port (51) and to variably control the flow of the hydraulic fluid from the outlet port (51) to the inlet port (50);
a spool (58) slidingly coupled to the valve block (52), and provided with a second throttling portion (57) to variably control the flow of the hydraulic fluid from the outlet port (51) to the inlet port (50) through the check valve (56) that is opened when the spool (58) is shifted by a pilot signal pressure (Pi); and
a third throttling portion (59) formed on the check valve (56) to variably control the flow of the hydraulic fluid from the outlet port (51) to the inlet port (50), wherein the third throttling portion (59) controls the hydraulic fluid that flows from the path 2 (54) to the path 1 (53) to correspond to an amount of a spool shift;
wherein when the check valve (56) moves to the right side, the first throttling portion (55) formed in the check valve (56) forms a variable throttling portion and the path 2 (54) and the path 1 (53) communicate with each other by the third throttling portion (59);
wherein the position of the second throttling portion (57) is determined depending on the shift amount of the spool (58) while the shift amount of the spool (58) is determined depending on the pilot signal pressure (Pi), thereby variably controlling the flow of the hydraulic fluid from the outlet port (51) to the inlet port (50); **characterised in that** a second check valve (62) is installed in a branch path (61) that is branch-connected to the path 1 (53) and the path 2 (54) to make the flow of the hydraulic fluid from the inlet port (50) to the outlet port (51) smooth.

## Patentansprüche

1. Hydraulisches Steuerventil für eine Baumaschine, welches Hydraulikfluid steuert, das einem Hydraulikzylinder zum Betreiben einer Arbeitsvorrichtung zugeführt wird, welches Folgendes umfasst:
einen Ventilblock (52), in dem ein Einlasskanal (50) und ein Auslasskanal (51), der über den Einlasskanal (50) in Verbindung steht, ausgebildet sind;
ein Rückschlagventil (56), das dahingehend installiert ist, einen Schnittstellenabschnitt eines Pfads 1 (53), der mit dem Einlasskanal (50) in Verbindung steht, und eines Pfads 2 (54), der mit dem Auslasskanal (51) in Verbindung steht, zu öffnen und zu schließen, und mit einem ersten Drosselabschnitt (55) zum Gestatten eines Stroms des Hydraulikfluids vom Einlasskanal (50) zum Auslasskanal (51) und zum variablen Steuern des Stroms des Hydraulikfluids vom Auslasskanal (51) zum Einlasskanal (50) versehen ist;
einen Schieber (58), der mit dem Ventilblock (52) verschiebbar gekoppelt ist und mit einem zweiten Drosselabschnitt (57) zum variablen Steuern des Stroms des Hydraulikfluids vom Auslasskanal (51) zum Einlasskanal (50) durch das Rückschlagventil (56), das geöffnet wird, wenn der Schieber (58) von einem Steuersignaldruck (Pi) verschoben wird, versehen ist; und
einen am Rückschlagventil (56) ausgebildeten dritten Drosselabschnitt (59) zum variablen Steuern des Stroms des Hydraulikfluids vom Auslasskanal (51) zum Einlasskanal (50), wobei der dritte Drosselabschnitt (59) das vom Pfad 2 (54) zum Pfad 1 (53) strömende Hydraulikfluid dahingehend steuert, einem Ausmaß an Schieberverschiebung zu entsprechen;
wobei der in dem Rückschlagventil (56) ausgebildete erste Drosselabschnitt (55) bei Bewegung des Rückschlagventils (56) zur rechten Seite einen variablen Drosselabschnitt bildet und der Pfad 2 (4) und der Pfad 1 (53) durch den dritten Drosselabschnitt (59) miteinander in Verbindung stehen;
wobei die Position des zweiten Drosselabschnitts (57) in Abhängigkeit von dem Ausmaß der Verschiebung des Schiebers (58) bestimmt wird, während das Ausmaß der Verschiebung des Schiebers (58) in Abhängigkeit vom Steuersignaldruck (Pi) bestimmt wird, wodurch der Strom des Hydraulikfluids vom Auslasskanal (51) zum Einlasskanal (50) variabel gesteuert wird;
**dadurch gekennzeichnet, dass** ein zweites Rückschlagventil (62) in einem Zweigpfad (61), der mit dem Pfad 1 (53) und dem Pfad 2 (54) zweigverbunden ist, für einen gleichmäßigen Strom des Hydraulikfluids vom Einlasskanal (50) zum Auslasskanal (51) installiert ist.

## Revendications

1. Vanne de commande hydraulique pour un engin de construction qui commande le fluide hydraulique fourni à un cylindre hydraulique pour entraîner un dispositif de travail, comprenant :
un bloc soupape (52) dans lequel sont formés un orifice d'entrée (50) et un orifice de sortie (51) qui communique avec l'orifice d'entrée (50) ;
un clapet antiretour (56) installé de manière à ouvrir et fermer une portion d'intersection d'un chemin 1 (53) communiquant avec l'orifice d'entrée (50) et un chemin 2 (54) communiquant avec l'orifice de sortie (51), et pourvu d'une première portion d'étranglement (55) pour permettre un écoulement du fluide hydraulique depuis l'orifice d'entrée (50) jusqu'à l'orifice de sortie (51) et pour commander de manière variable l'écoulement du fluide hydraulique depuis l'orifice de sortie (51) jusqu'à l'orifice d'entrée (50) ;
une bobine (58) accouplée de manière coulissante au bloc soupape (52), et pourvue d'une deuxième portion d'étranglement (57) pour commander de manière variable l'écoulement du fluide hydraulique depuis l'orifice de sortie (51) jusqu'à l'orifice d'entrée (50) à travers le clapet antiretour (56) qui est ouvert lorsque la bobine (58) est déplacée par une pression de signal pilote (Pi) ; et
une troisième portion d'étranglement (59) formée sur le clapet antiretour (56) pour commander de manière variable l'écoulement du fluide hydraulique depuis l'orifice de sortie (51) jusqu'à l'orifice d'entrée (50), la troisième portion d'étranglement (59) commandant le fluide hydraulique qui s'écoule depuis le chemin 2 (54) jusqu'au chemin 1 (53) pour correspondre à une quantité de déplacement de bobine ;
la première portion d'étranglement (55) formée dans le clapet antiretour (56), lorsque le clapet antiretour (56) se déplace vers la droite, formant une portion d'étranglement variable et le chemin 2 (54) et le chemin 1 (53) communiquant l'un avec l'autre par le biais de la troisième portion d'étranglement (59) ;
la position de la deuxième portion d'étranglement (57) étant déterminée en fonction de la quantité de déplacement de la bobine (58), tandis que la quantité de déplacement de la bobine (58) est déterminée en fonction de la pression de signal pilote (Pi), pour ainsi commander de manière variable l'écoulement du fluide hydraulique depuis l'orifice de sortie (51) jusqu'à l'orifice d'entrée (50) ; **caractérisé en ce qu'**un deuxième clapet antiretour (62) est installé dans un chemin de ramification (61) qui se ramifie sur le chemin 1 (53) et le chemin 2 (54) pour rendre régulier l'écoulement du fluide hydraulique depuis l'orifice d'entrée (50) jusqu'à l'orifice de sortie (51).
